# EUROPEAN PATENT SPECIFICATION

(11) **EP 0 945 112 B1**
(45) Date of publication and mention of the grant of the patent: **19.11.2003**
(21) Application number: 98105527.0
(22) Date of filing: 26.03.1998
(51) Int. Cl.: A61G 5/04

(54) **Power-assisted wheelchair and method of operating same**
Rollstuhl mit Hilfsantrieb und Verfahren zu seinem Betrieb
Fauteuil roulant à assistance motorisée et son procédé de fonctionnement

(43) Date of publication of application: 29.09.1999
(73) Proprietor: YAMAHA HATSUDOKI KABUSHIKI KAISHA, Iwata-shi Shizuoka-ken, 438 (JP)
(72) Inventor: Uchiyama, Atsushi, Iwata-Shi, Shizuoka-ken (JP); Ogata, Hiroaki, Iwata-Shi, Shizuoka-ken (JP)
(74) Representative: Grünecker, Kinkeldey, Stockmair & Schwanhäusser Anwaltssozietät

(56) References cited:
- EP-A- 0 687 454
- EP-A- 0 776 647
- EP-A- 0 790 049

## Description

This invention relates to a power-assisted wheelchair comprising an assist power control means adapted to control the assist power of an amount determinable according to human power applied to at least one of two driving wheels, and to a method of operating a power-assisted wheelchair comprising an assist power control means adapted to control the assist power of an amount determinable.

A power-assisted wheelchair has been proposed as an intermediate presence between the manual wheelchair and the electric motor-operated wheelchair, see for instance document EP-A-0 687 454. In the power-assisted wheelchair, amounts of human power applied intermittently to left and right wheels are detected, amounts of assist power commensurate with the detected amounts of the human power are applied to the left and right wheels to alleviate physical effort of a user or a rider having difficulty in walking. The user may operate the wheelchair with the same feeling as that with the manual wheelchair and is relieved of mental strain.

With the above-described power-assisted wheelchair, since the assist power is supplied commensurate with the human power, there is a concern that the speed becomes too high. In order to avoid such a problem, the inventors are now in the process of developing an arrangement in which the assist power relative to human power is decreased when the vehicle speed exceeds a specified value.

Accordingly, it is an objective of the present invention to provide an improved power-assisted wheelchair as indicated above which facilitates with simple technical means the prevention of dangerous situations for a rider of such a wheelchair.

According to the present invention, this objective is solved for a power-assisted wheelchair as indicated above in that said assist power control means being further adapted to alter the amount of assist power for a given human power when the vehicle speed reaches or exceeds at least one specified preset value.

However, with the arrangement of simply decreasing the assist power according to the vehicle speed, there is still a concern that the vehicle speed becomes too high on a downhill.

Therefore, it is advantageous when said assist power control means being adapted to alter the amount of the assist power for a given human power such that when the vehicle speed exceeds a first preset value V1, the assist power is decreased as the vehicle speed increases, brought to substantially zero at a second preset value V2, and brought to a negative value when the vehicle speed exceeds a third preset value V3, where V2 is not greater than V3.

In that case, it is advantageous when said wheelchair is provided with a preset vehicle speed control means for setting the first through third preset values V1 through V3 to the values corresponding to the amount of the human power every time it is applied to the driving wheels.

According to another preferred embodiment of the present invention, the preset vehicle speed control means being adapted to maintain the first through third preset values of V1 through V3 at the values set before the stop of human power supply, for a specified period of time after the stop of the human power supply, and thereafter decreases those values with the lapse of time.

Moreover, it is advantageous when said assist power control means comprising an insensitive zone width, which is commensurate with the degree of disability of a user, said insensitive zone width being automatically settable on the basis of the history of applied human power amounts or is manually settable.

Moreover, it is an objective of the present invention to provide an improved method as indicated above which always ensures the prevention of dangerous situations of a rider using said wheelchair.

According to the present invention, this objective is solved for a method as indicated above in that for a given human power the amount of assist power is altered by the assist power control means when the vehicle speed reaches or exceeds at least one specified preset value.

However, with the method of simply decreasing the assist power according to the vehicle speed, there is still a concern that the vehicle speed becomes too high on a downhill.

Therefore, it is advantageous when said assist power control means alters the amount of the assist power for a given human power such that when the vehicle speed exceeds a first preset value V1, the assist power is decreased as the vehicle speed increases, brought to substantially zero at a second preset value V2, and brought to a negative value when the vehicle speed exceeds a third preset value V3, where V2 is not greater than V3.

According to another preferred embodiment of the present invention, it is advantageous when a preset vehicle speed control means sets the first through third preset values to the values corresponding to the amount of the human power every time it is applied to the driving wheels.

In that case, it is in addition advantageous when said preset vehicle speed control means maintains the first through third preset values of V1 through V3 at the values set before the stop of human power supply, for a specified period of time after the stop of the human power supply, and thereafter decreases those values with the lapse of time.

According to another preferred embodiment of the present invention, said assist power control means comprises an insensitive zone width, which is commensurate with the degree of disability of a user, said insensitive width is automatically set on the basis of the history of applied human power amounts or is manually set.

According to an embodiment of the invention, a power-assisted wheelchair is adapted to be assisted with power of an amount determined according to human power applied to one or both of driving wheels disposed on left and right hands of the vehicle as seen in its advancing direction, characterized in that the wheelchair comprises assist power control means which changes the amount of the assist power for a given human power such that; when the vehicle speed exceeds a first preset value of V1, the assist power is decreased as the vehicle speed increases, brought to substantially zero at a second preset vehicle speed of V2, and brought to a negative value when the vehicle speed exceeds a third preset value of V3, where V2 is not greater than V3 (V2≤ V3).

Here, the invention includes the case in which the second preset vehicle speed of V2 is the same as the third preset vehicle speed of V3.

In another embodiment of the invention, the wheelchair comprises preset vehicle speed control means for setting the first through third preset vehicle speeds (V1 through V3) to the values corresponding to the amount of the human power every time it is applied to the driving wheels.

In that case, it is advantageous when the preset vehicle speed control means maintains the first through third preset vehicle speeds of V1 through V3 at the values set before the stop of human power supply, for a specified period of time after the stop of the human power supply, and thereafter decreases those values with the lapse of time.

Moreover, it is possible that the assist power control means increases the amount of the assist power with the decrease in the vehicle speed when the vehicle speed is below a fourth preset vehicle speed of V4 which is smaller than the first preset vehicle speed of V1.

According to a further embodiment of the invention, the vehicle speed is the substantial center of gravity speed resultant from the rotation speeds of the left and right driving wheels.

One embodiment of the invention is arranged that the amount of the assist power for a given human power is changed such that; when the vehicle speed exceeds a first preset value of V1, the assist power is decreased as the vehicle speed increases, brought to substantially zero at a second preset vehicle speed of V2, and brought to a negative value when the vehicle speed exceeds a third preset value of V3, where V2 is not greater than V3 (V2≤ V3). As a result, on a normal level road, the vehicle speed is prevented from excessively increasing due to the application of the assist power. On a downhill, since the assist power is made negative or made to be a braking force when the vehicle speed exceeds the third preset value of V3, the problem of an excessive speed may be avoided also on the downhill.

According to another embodiment of the invention, every time human power is applied the first through third preset vehicle speeds (V1 through V3) can be reset to the values corresponding to the amount of each human power, and therefore, for example, when the wheelchair is moving on a downhill adjacent at the second preset vehicle speed of V2, and human power is applied to a wheel (or wheels) to change the running direction for avoiding an obstacle in front of the wheelchair, the second preset vehicle speed of V2 is newly reset to a higher value. Accordingly, as the assist power is not immediately shifted to a negative value, or the regenerative braking phase in spite of the increase in the actual vehicle speed caused by the application of human power, and thus assist power corresponding to the amount of human power can be supplied to readily avoid an obstacle.

To the contrary, if the preset vehicle speeds of V1 through V3 are fixed, there is a concern that, when a wheelchair of the constitution of claim 1, for example, at the actual vehicle speed near the above-mentioned second preset vehicle speed of V2, is moving on a downhill, and human power is applied to the wheel(s) to avoid an obstacle in front of the wheelchair, it is occurred to shift into the regenerative braking phase of the assist power as the result of the increase in the actual vehicle speed. In such a state, the amount of the assist power would be insufficient and a larger human power might be required for avoiding the obstacle.

A further embodiment of the invention is arranged that the first through third preset vehicle speeds of V1 through V3 are maintained at the values set before the stop of human power supply, for a specified period of time after the stop of the human power supply, and thereafter those values decrease with the lapse of time. Accordingly, problem of immediate stop of the assist power due to the concordance of actual vehicle speed with the second preset vehicle speed of V2, or further the motor driving system inversely becoming a load leading to poor operational feeling due to an immediate change of the actual vehicle speed more than the second preset vehicle speed of V2 to shift into the regenerative braking phase may be avoided even if the human power application is stopped.

A still further embodiment of the invention is arranged that the assist power is increased with the decrease in the vehicle speed when the vehicle speed is below a fourth preset vehicle speed of V4 which is smaller than the first preset vehicle speed of V1. As a result, for example, when the vehicle speed decreases below the fourth preset value of V4 on an uphill, the assist power is increased so that the wheelchair can be prevented from being moved backward during no application of human power to the wheel.

Since another embodiment of the invention is arranged that the vehicle speed is the substantial center of gravity speed resultant from the rotation speeds of the left and right wheels, the problem of the wheelchair excessively turning due to supply of the assist power may be avoided.

Other preferred embodiments of the present invention are laid down in further dependent claims.

In the following, the present invention is explained in greater detail with respect to several embodiments thereof in conjunction with the accompanying drawings, wherein:
FIG. 1 is a side view of a power-assisted wheelchair;
FIG. 2 is a plan view of the wheelchair;
FIG. 3 is a rear view of the wheelchair;
FIG. 4 is an axial view of the wheel hub portion of the wheelchair with its cover removed;
FIG. 5 is a cross-sectional view taken along the line V-V in FIG. 4;
FIG. 6 is an axial view of a rotary transformer portion for the wheelchair;
FIG. 7 is a cross-sectional side view of the rotary transformer portion for the wheelchair;
FIG. 8 is a side view of the rotary transformer portion for the wheelchair;
FIG. 9 is a perspective view of the rotary transformer portion for the wheelchair;
FIG. 10 is a system constitution showing the control operation of the assist power for the wheelchair;
FIG. 11 is a characteristic graph of human power and output torque;
FIG. 12 is a characteristic graph showing change in the upper limit voltage with time in the control operation;
FIG. 13 is a characteristic graph of vehicle speed to motor torque in the control operation;
FIG. 14 is a system constitution showing the control operation of a second embodiment of the assist power for the wheelchair;
FIG. 15 is a system constitution showing the control operation of a third embodiment of the assist power for the wheelchair; and
FIG. 16 is a characteristic graph of vehicle speed to motor torque in the control operation of the third embodiment.

Embodiments of the invention will now be described in reference to the appended drawings.

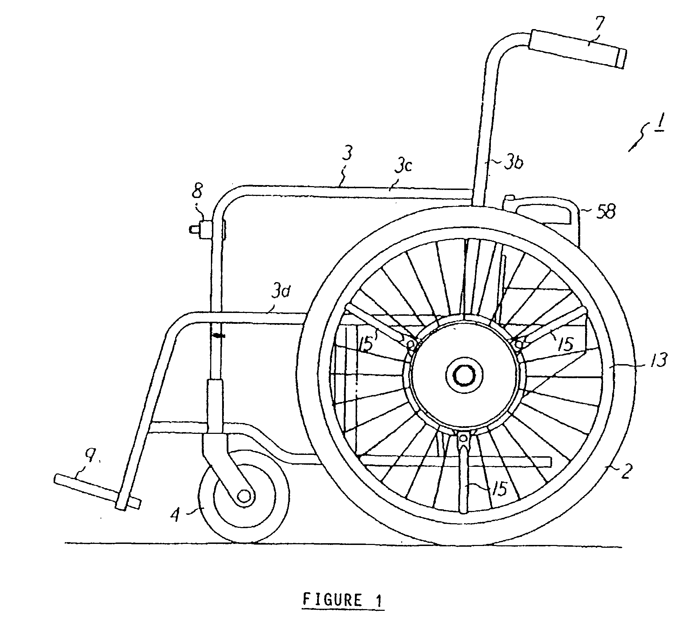

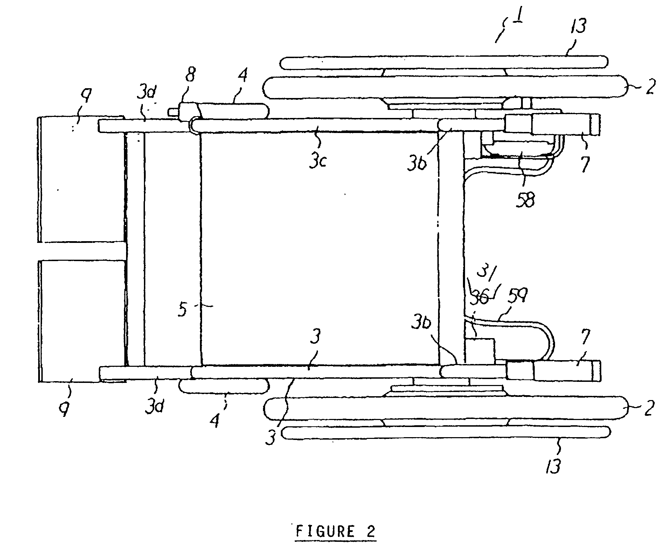

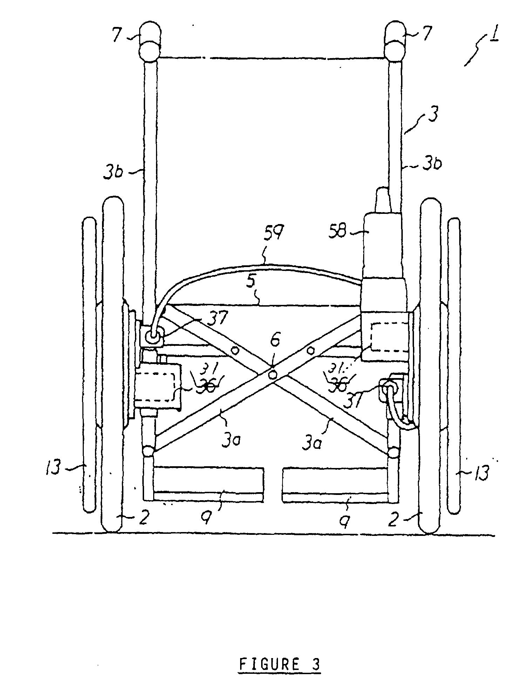

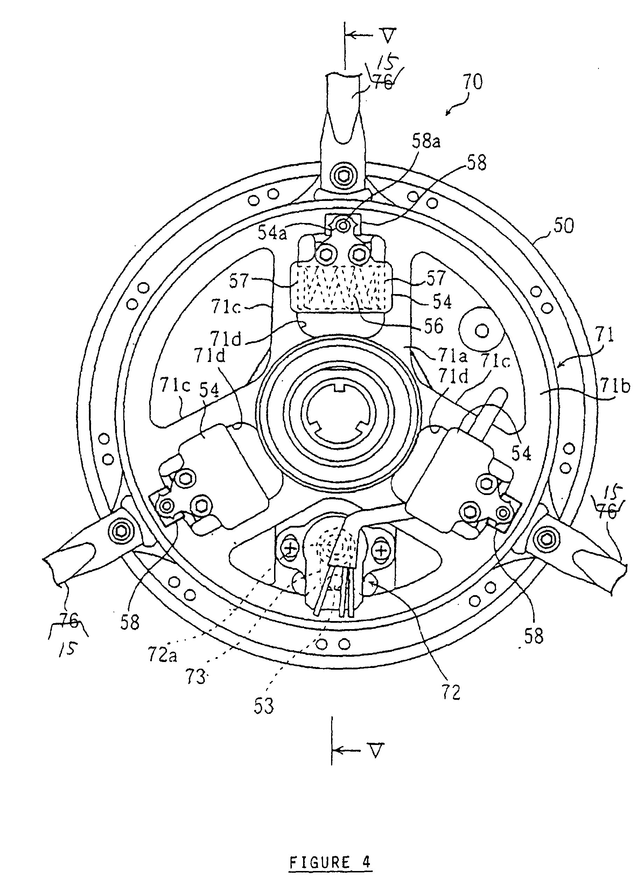

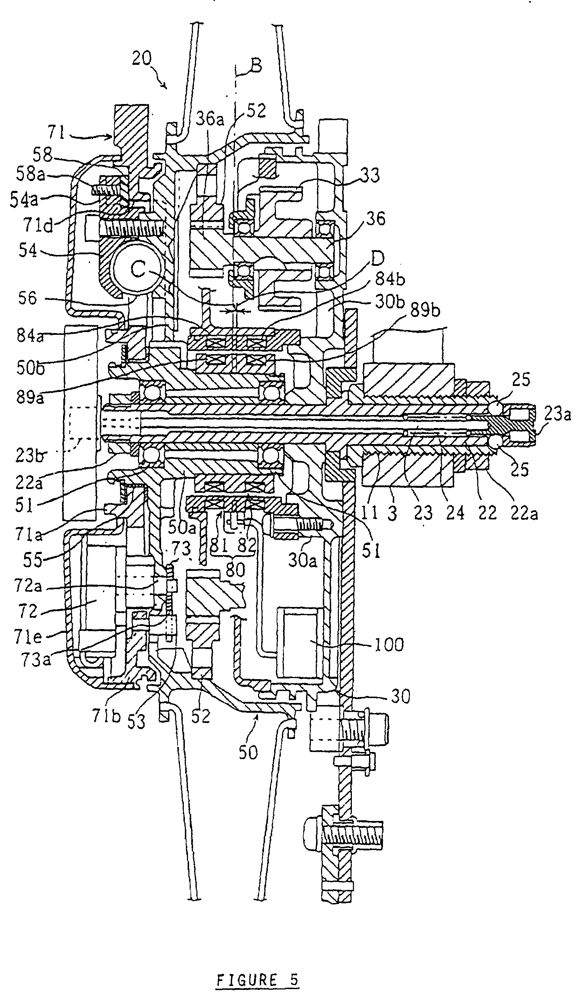

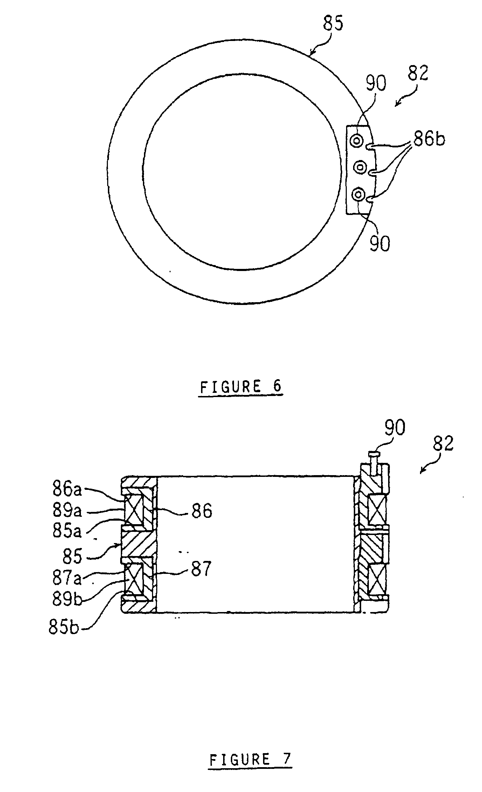

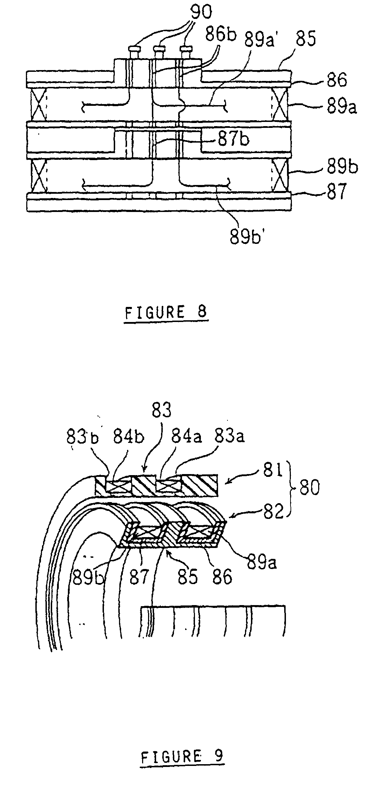

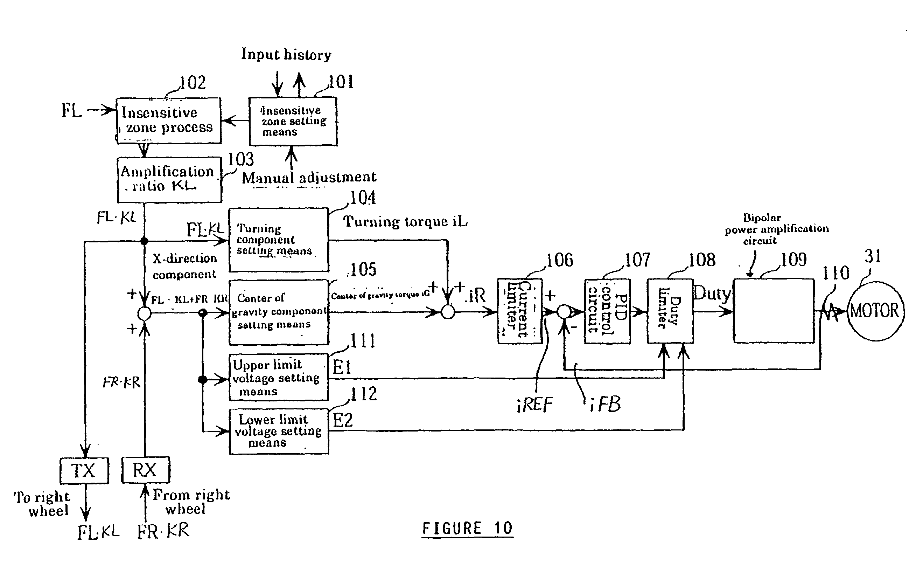

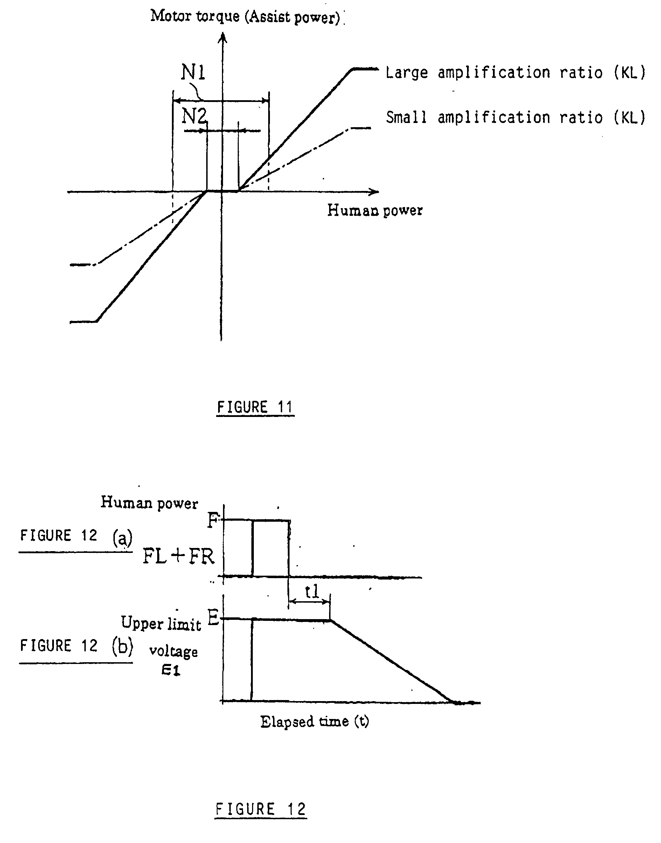

FIGs. 1 through 13 are drawings for describing a power-assisted wheelchair as a first embodiment of the invention. FIG. 1 is a side view of the wheelchair. FIG. 2 is a plan view of the wheelchair. FIG. 3 is a rear view of the wheelchair. FIG. 4 is an axial view of the wheel hub portion of the wheelchair with its cover removed. FIG. 5 is a cross-sectional view taken along the line V-V in FIG. 4. FIGs. 6 through 9 are drawings showing a rotary transformer. FIG. 10 shows a system constitution for an assist power control device. FIGs. 11 through 13 are characteristic graphs for describing the control function.

The power-assisted wheelchair 1 of this embodiment is made by adding a power assist system to an existing manual wheelchair of the folding type. The wheelchair 1 comprises left and right wheels or driving wheels removably attached to the left and right hands of the vehicle body. Front and rear parts of the pipe frame 3 of the vehicle body are supported with paired right and left casters 4 and wheels 2 for free rolling.

A seat 5 (Refer to FIGs. 2 and 3) made of cloth for a rider to sit on is stretched in the center of the frame 3. As shown in FIG. 3, the frame 3 has paired front and rear cross members 3a. The X-shaped cross members 3a are pivoted at their intersection by means of a shaft 6.

Paired right and left handle arms 3b are erected in the rear part of the frame 3. The upper ends of the handle arms 3b are bent rearward and provided with grips 7 for a tending person.

Paired right and left arms 3c extend from the middle height position of the handle arms 3b of the frame 3 horizontally forward of the vehicle body and then bend downward at generally right angles, with their ends provided with casters 4 for free rolling. A main switch 8 is attached to the upper part of the vertically bent portion of the right hand (as seen from a seated user) arm 3c. Front ends of paired right and left seat pipes 3d disposed below the arms 3c extend obliquely down forward, with their extended ends (fore-ends) provided with paired left and right steps 9.

Each of the wheels 2 is provided with a hand rim assembly 70 for the user to apply rotational force (human power) by hand and with a drive section 20 for outputting motor driving force (assist power) corresponding to the human power inputted from the hand rim assembly 70.

A boss 11 is screwed into each wheel center portion of the frame 3 and secured with a nut 22a. A wheel shaft 22 is inserted into the axial center of the boss 11. The wheel shaft 22 is of a hollow shape in the center of which is inserted a shaft 23 which is axially movable. Both end portions of the shaft 23 are respectively formed with head portions 23a and 23b of a larger diameter than that of other portion thereof. A coil spring 24 is disposed inside the right hand head portion 23a to urge the shaft 23 toward the right relative to the wheel shaft 22. A plural number of balls 25 are held on the wheel shaft 22 so as not to fall out but movable in the radial direction. The balls 25 are pushed radially outward with the larger diameter portion of the head portion 23a slightly beyond the outside circumference of the wheel shaft 22 so that the wheel shaft 22 does not come off the boss 11. Also, the wheel shaft 22 may be drawn out of the boss 11 to the left as seen in FIG. 2 by moving the shaft 23 to the left relative to the wheel shaft 22 so that the small diameter portion of the head portion 23a moves to the position of the balls 25 and the balls 25 may move inward.

The wheel shaft 22 passes through and supports the central portion of a fixing plate 30 which is of a generally cylindrical shape with a bottom and has a rotation stop member (not shown) which engages with the frame 3 to prevent the fixing plate 30 from rotating.

Also, the wheel shaft 22 supports for free rotation through a bearing 51 a hub 50 of a generally cylindrical shape with a bottom as a rotating side member. An internal gear 52 is secured to the inside surface of the hub 50. The internal gear 52 engages with an intermediate gear 36a formed integrally with an intermediate shaft 36 which is supported for rotation on the bottom surface of the fixing plate 30 as a fixed side member. The intermediate shaft 36 is driven for rotation with a driving motor 31 (Refer to FIG. 3) attached to the fixing plate 30 through a pulley 33 secured to the intermediate shaft 36 and a belt. As a result, the hub 50 rotates. The motor 31 is a DC motor of permanent magnet type.

On the hub 50 is supported the hand rim assembly 70 for relative rotation by a specified angle. The hand rim 70 serves to transmit the torque applied by the user on the hand rim 13 to the hub 50 and at the same time to detect the applied torque. Now the mechanism for transmitting the torque applied by the user will be described.

FIGs. 4 and 5 show a disk 71 as a central part of the hand rim assembly 70. The disk 71 comprises an inner ring 71a portion and an outer ring portion 71b interconnected through three spoke portions 71c, and secured to the hand rim 13 through three spoke pipes 15. Also, the disk 71 is supported for relative rotation on the boss portion 50a of the hub 50 through a bush 55.

A potentiometer 72 is disposed between the spoke portions 71c and 71c, and secured to the outside surface of the bottom portion 50b of the hub 50 so that its radial position is adjustable. The input shaft 72a of the potentiometer 72 projects to the inside of the bottom portion 50b. A lever 73 having an elongate hole 73a is attached to the projecting portion of the input shaft 72a. A pin 53 secured to the disk 71 is inserted into the elongate hole 73a of the lever 73. With such a constitution, when the relative angle between the hub 50 and the hand rim assembly 70 changes from a reference position, the input shaft 72a of the potentiometer 72 rotates and its impedance changes according to the relative angle.

A spring guide 54 is disposed in a rectangular hole 71d formed in the spoke portion 71c and bolt-secured to the bottom portion 50b of the hub 50. A slider 57 and a coil spring 56 with its both ends defined by the spring guide 54 and the bottom portion 50b are accommodated in the spring guide 54. Both ends of the coil spring 56 are in contact with the inside edges of the rectangular hole 71d of the spoke portion 71 through sliders 57. With such a constitution, when the hand rim assembly 70 is rotated relative to the wheel 2, the relative rotation angle is detected with a human power detection device which will be described later.

A plastic material-made damper member 58 serves to prevent rattle between the hub 50 and the disk 71. The damper member 58 is installed inside a recess 54a formed in the spring guide 54 and opposes the outer ring portion 71b of the disk 71. When a bolt 58a is screwed in, the damper member 58 comes into sliding contact with the outer ring portion 71b to prevent to prevent rattle between the hub 50 and the disk 71. FIG. 5 shows a cover 71e for covering the potentiometer 72 and others. In FIG. 4, the cover 71e is removed.

The symbol 100 denotes a controller disposed on the inside surface of the bottom portion 30b of the fixing plate 30, which will be described later.

Now the human power detection device will be described.

A differential rotation transformer 80 comprises; an outer transformer 81 attached to the boss portion 30a in the center of the fixing plate 30, and an inner transformer 82 attached to the boss portion 50a of the hub 50.

The outer transformer 81 comprises a cylindrical bobbin 83 made of a nonmagnetic, insulating plastic material, with its outside cylindrical surface recess-formed with two winding grooves 83a and 83b, and primary coils 84a and 84b wound in the winding grooves 83a and 83b.

The inner transformer 82 comprises a cylindrical core 85 made of a magnetic material (metallic material such as mild steel), with its outside cylindrical surface recess-formed with two winding grooves 85a and 85b, and secondary coils 89a and 89b wound in the winding grooves 85a and 85b.

The symbols 86b and 87b denote slits formed in the bobbins 86 and 87, and the symbol 90 denotes a terminal. Ends 89a' and 89b' of the secondary coils 89a and 89b are led out through the slits 86b and 87b and wound on the terminals 90.

Here, the outer transformer 81 is not provided with a core of a magnetic material having function of shielding external magnetic field and therefore it is preferable to be disposed to restrict magnetic imbalance caused by external metallic parts. In this embodiment, to make the magnetic distance between the primary coil 84a to the bottom portion 50b of the hub 50 (distance in consideration of the magnetic influence) and the magnetic distance between the primary coil 84b to the bottom portion 30b of the fixing plate 30 as equal as possible, the center line D of the width of the outer transformer 81 is displaced by a dimension C toward the fixing plate 30 relative to the center line B of the wheel width.

In other words, generally the width center line D of the outer transformer 81 is made to match with the wheel width centerline B. However, such an arrangement undesirably increases the difference between the distance from the primary coil 84a to the bottom portion 50b of the hub 50 and the distance from the primary coil 84b to the bottom portion 30b of the fixing plate 30.

The amounts of the human power to the left and right wheels are detected with the left and right potentiometers 72, 72, inputted through the left and right rotary transformers 80, 80 to the controller 100 which in turn controls power supply to the motors 31 according to specified procedure so that assist power commensurate with the human power is obtained.

Next, the function of controlling the assist power will be described in reference to FIGs. 10 through 13.

Here, FIG. 10 shows the control function in the left hand wheel 2. The assist power control of the device of this embodiment is of a torque control type, or a current control type, in which the assist power from the motor is controlled along the constant voltage characteristic by setting a limit to the duty ratio in the current control loop. By the way, the constant voltage characteristic of the motor has a negative gradient relative to the revolution.

First, by means of insensitive zone width setting means 101, an insensitive zone width commensurate with the degree of disability of the user is automatically set on the basis of the history of human power amounts FL, FR (inputs) applied to the hand rims 13, 13 of the left and right wheels 2, 2. Also, it is arranged to permit manual setting. By the way, the insensitive zone width means the range of human power amount which does not result in the output of the assist power, and it is mainly intended to absorb sensitivity variation in the human power detection device.

In this embodiment as shown in FIG. 11, an assist standby time width N1 as the insensitive zone width is selected with the insensitive zone width setting function 101 at the time of electric power turning on or when no human power input is made for a specified period of time. Once the human input exceeds the standby time width N1, a smaller assist time width N2 is selected. The reason for setting the assist standby time width N1 to a large value is to confirm the intention of the user requiring an assist power and to prevent the assist power from being accidentally produced. Once a human power is inputted in excess of the assist standby time width N1, the assist time width N2 is selected. The reason for setting the assist standby time width N2 to a small value is to assure smooth assist operation.

It is a matter of course that the manner of setting the insensitive zone width is not limited to two kinds but may be selected from a plural number of kinds. It is also possible to provide a changing switch, an adjustment knob, etc. for the user to manually change the sizes of the zones.

Next, in the insensitive zone processing 102, an insensitive zone is given to the input signal FL, and multiplied by an amplification ratio KL (Refer to FIG. 11) set according to the degree of disability of the user (103). Based on the product of FL and KL, turning component setting means 104 determines a turning torque iL as a turning movement causing component. Here, the amplification ratios KLs for the left and right wheels may be different from each other depending on the difference in muscle power strengths between left and right arms of the user.

By means of center of gravity component setting means 105, a center of gravity torque iG is determined as a component causing straight line movement based on a resultant force (FL•KL + FR•KR) based on specified amplification ratios of the left hand human power FL and the right hand human power FR.

By adding the turning torque iL and the center of gravity torque iG, a target torque iR is obtained. By means of a current limiter 106, a target current value iREF is determined which is necessary for the motor 31 to produce the target torque iR. Based on difference between the target value iREF and an actually flowing current iFB detected with a current sensor 110, a compensation amount is determined with a PID control circuit 107. A duty limiter 108 performs voltage checking, which will be described later, and a specified duty ratio is outputted. A bipolar power amplifier 109 converts the control signal (duty ratio) into an actual current. In this way, the assist current is supplied to the motor 31.

Here, while the assist current is determined according to the amount of the human power, the current does not become zero immediately when the human power supply stops, but remains unchanged for a specified period of time (for example t1) and thereafter decreases gradually.

Also in this embodiment, an upper limit voltage setting means 111 and a lower limit voltage setting means 112 set an upper limit voltage E1 and a lower limit voltage E2. The voltage determined from the duty ratio in the duty limiter 108 is limited within the upper and lower limit voltages E1 and E2, and outputted. Thus, the rotation speed of the motor 31, or the vehicle speed is limited with the upper and lower limit voltages.

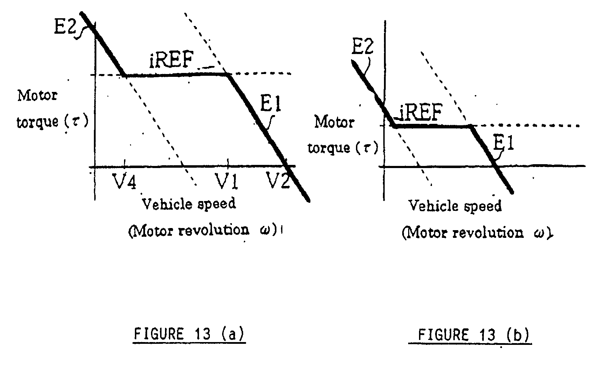

At each inputting of human power, the upper limit voltage E1 and the lower limit voltage E2, or V1 and V2, respectively, are reset larger when the sum of the human power amounts FL and FR is larger (Refer to FIG. 13a), and vice versa (FIG. 13b). FIG. 13 indicates that the upper limit voltage E1 and lower limit voltage E2 specify the rotation speed of the motor or the vehicle speed, and that the target current iREF specifies the motor torque.

At each inputting, the upper and lower limit voltages E1 and E2, or V1 and V2 are initially set to specified values according to the amounts of the human power (for example the values shown in FIG. 13a) and then as shown in FIG. 12, for a specified period of time t1 after the stop of the human power supply they are maintained at the values (the values shown in FIG. 13a) set before the stop of human power application, and gradually decreased with the lapse of time to the value, for example, shown in FIG. 13b. This process is repeated at each input of human power.

As a result, with this embodiment, the assist power output from the motor 31 varies as follows: Under the state of the actual vehicle speed in forward movement from the fourth preset vehicle speed of V4 to the first preset vehicle speed of V1, the current for the assist power is maintained at the target current value of iREF. When the actual vehicle speed exceeds the first preset vehicle speed of V1, the current is gradually decreased with the increase in the vehicle speed to substantially zero at the second preset vehicle speed of V2. When the actual vehicle speed further increases beyond the second preset vehicle speed of V2, the motor 31 serves as a load.

Also, the assist power output from the motor 31 is increased with the decrease in the vehicle speed when the actual vehicle speed in forward movement decreases below the fourth preset vehicle speed of V4. This means that, for example, even if the human power input is stopped when actual the vehicle speed is below V4, the assist power is increased for the period of time t1 to maintain the actual vehicle speed at V4, and then the actual vehicle speed gradually decreases.

As describe above, in this embodiment, the insensitive zone width is made in two steps: it is made as the assist standby time width N1 at the time of electric power turning on or when no human power input is made for a specified period of time, and once the human power exceeds the assist standby time width N1, it is made as the assist time width N2, where N1 > N2. As a result, at the time of electric power turning on, supply of the assist power is started only when the human power is applied beyond the relatively largely set value of N1, so that the intention of the user requiring the assist power is confirmed and prevents the assist power from being accidentally produced.

Once the human power is inputted beyond the assist standby time width N1, the assist time width N2 is selected. Since the value of N2 is set small, smooth assist operation may be performed according to the history of input.

It is also possible to arrange that the insensitive zone width may be adjusted by the user using an external switch, adjustment knob, etc. In this way, the insensitive zone width may be set according to the degree of disability of the user to start the supply of the assist power more smoothly, which is another advantage.

Also, since this embodiment is arranged that, every time human power is applied, the upper limit voltage E1 supplied to the motor 31 is reset to the value corresponding to the amount of the human power, the vehicle speed is limited with the upper limit voltage E1 so that the problem of excessive vehicle speed may be avoided. When the vehicle speed exceeds the second preset vehicle speed V2, the motor 31 becomes a load so that the problem of excessive speed on the downhill may be avoided.

Since the target current iREF and the upper limit voltage E1 are controlled to be maintained at values set before the stop of human power supply, for a specified period of time t1 after the supply of human power F is stopped, and thereafter decreased with the lapse of time. As a result, problems are avoided such as; the motor becomes a load when the vehicle is coasting during a pause of human power input, or sudden deceleration on an uphill upon stopping the human power input.

Furthermore, since it is arranged that when the actual vehicle speed goes below the fourth preset vehicle speed of V4, the assist power is increased with the decrease in the actual vehicle speed. As a result, it is possible to prevent the wheelchair from being moved backward to cause to be temporarily held in the middle of an uphill during a pause of human power input if the V4 is set to zero. So it is possible for the rider to change the gripping position on the hand rim without haste and resume supplying human power input. This improves ease of use. By the way, the holding time duration in such a case is dependent on the setting of the upper limit voltage holding time t1. After that holding time, the amount of the assist power decreases gradually.

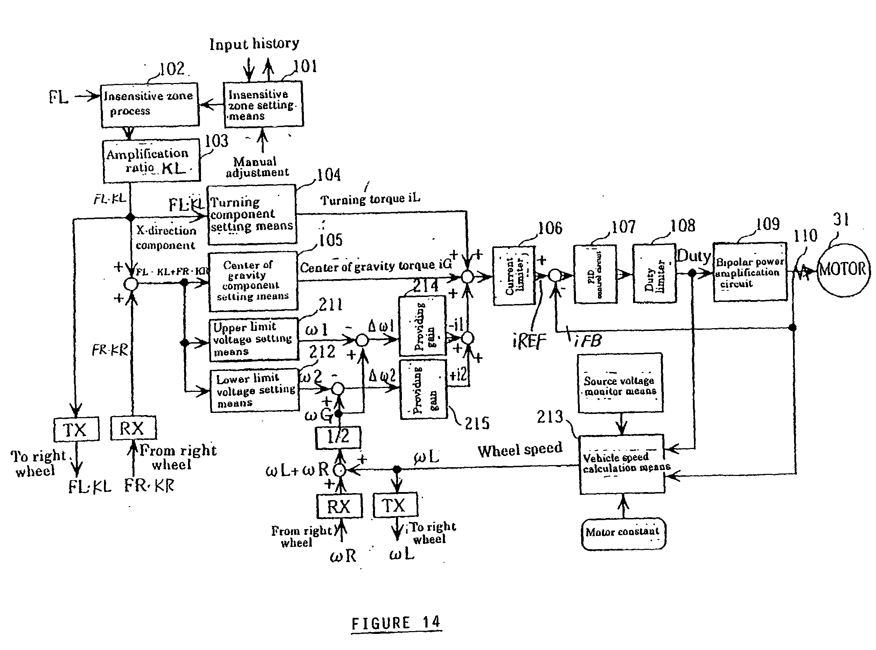

In the first embodiment described above, it is arranged that the assist power amount is limited by limiting the upper limit voltage E1 and the lower limit voltage E2, and as a result, the vehicle speed is controlled. However, at each inputting of human power it is also possible to set upper and lower limit speeds 1 and 2 according to the magnitude of the human power and control the vehicle speed according to the difference between a detected vehicle speed and the upper and lower limit speeds. Such an arrangement is shown in FIG. 14 as the second embodiment. In FIG. 14, the same symbols denote the same or like parts as those in FIG. 10.

In this embodiment, upper limit speed setting means 211 and lower limit speed setting means 212 set an upper limit speed 1 and a lower limit speed 2 according to the input human power amounts FL and FR. By the way, the upper limit speed 1 corresponds to the second preset vehicle speed of V2 in FIG. 13, and the lower limit speed 2 to the fourth preset vehicle speed of V4.

Based on a duty ratio outputted from the duty limiter 108, a current value from the current detector 110, power source characteristic, and motor constants of the motor 31, vehicle speed calculation means 213 calculates left and right wheel speeds L and R. By the way, while a separate vehicle speed sensor of mechanical type may be employed, the type of this embodiment is more favorable in terms of cost, weight, and layout space.

The left wheel speed L and the right wheel speed R are added and divided by two to obtain the center of gravity speed G. The G is then compared with the upper and lower limit speeds 1 and 2. Gain providing means 214 and 215 determine torque to be increased or decreased according to the difference; when the center of gravity speed G is greater than the upper limit speed 1, the torque to be decreased is determined as -i1, and when the center of gravity speed G is smaller than the lower limit speed 2, the torque to be decreased is determined as +i2. The increment torque +i2 and the decrement torque -i1 are added to the turning torque and the center of gravity torque and in the step 106, the target current iREF is determined.

In the second embodiment too, the same effects as those of the first embodiment are obtained. The second embodiment can further provide an effect of a wide usable duty ratio in the PWM control.

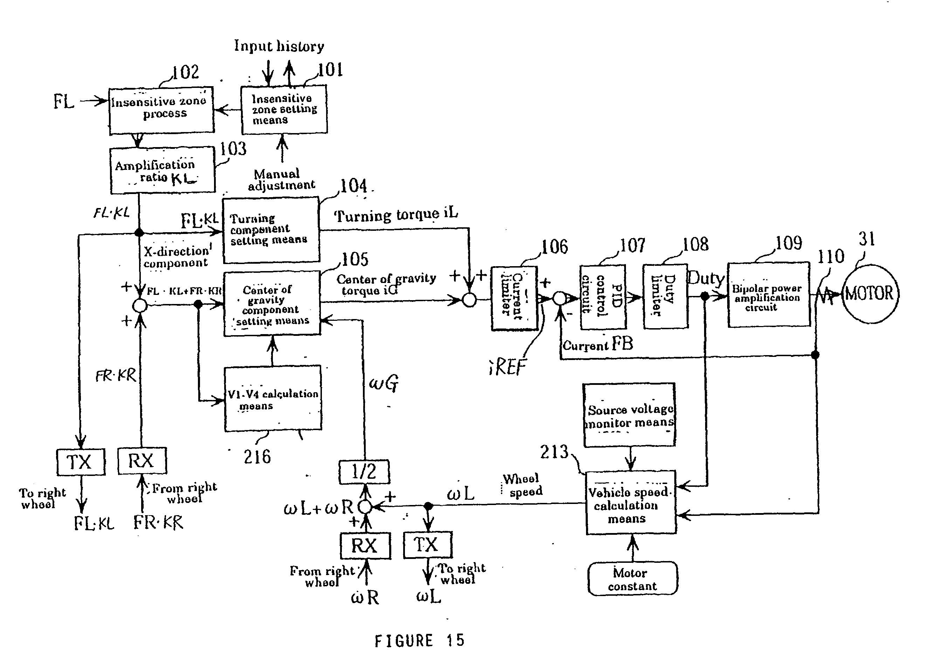

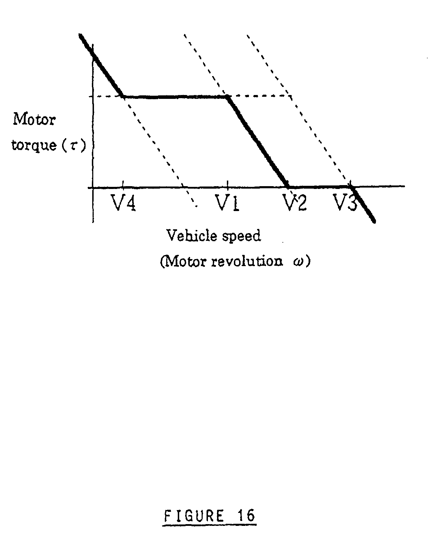

in the first and second embodiments as described above, it is arranged that the assist power is made zero at the second preset vehicle speed of V2, and further the motor 31 serves as a load when the vehicle speed exceeds the second preset vehicle speed V2. On the other hand, FIGs. 15 and 16 show a third embodiment in which the motor 31 serves as a load when the vehicle speed exceeds a third preset vehicle speed of V3 which is greater than the V2. In FIGs. 15 and 16, the same symbols denote the same or like parts as those in FIGs. 10 and 14.

In the third embodiment, preset vehicle speed calculation means 216 calculates at each inputting of human power, the first through fourth preset vehicle speeds of V1 through V4 according to the human power amounts FL, FR applied to the left and right wheels. In this case, the greater are the human power amounts, the greater are set the first through fourth preset vehicle speeds of V1 through V4, and vice versa.

The center of gravity component setting means 105 calculates a center of gravity torque iG according to the first through fourth preset vehicle speeds and the detected center of gravity speed G. The result is added to the turning torque iL in the step 106 to determine the target current iREF.

In this case, the target current iREF is determined so that the assist power is commensurate with the human power when the center of gravity speed G is between the fourth and first preset vehicle speeds of V4 and V1, the assist power is gradually decreased when the center of gravity speed G is between the first and second preset vehicle speeds of V1 and V2, the assist power is made zero when the center of gravity speed G is between the second and third preset vehicle speeds of V2 and V3, and the load gradually increases as the center of gravity speed G increases beyond the third preset vehicle speed of V3. This makes it possible that the motor 31 does not serve as a load immediately beyond the second preset vehicle speed of V2 and the wheelchair may coast until it reaches the third preset vehicle speed of V3. All the embodiments described heretofore disclose that at each inputting of human powers the first through forth preset vehicle speeds of V1 through V4 are set corresponding to each of the amount of human powers. This invention also includes another form in which the first through forth preset vehicle speeds of V1 through V4 are fixed values independent on the amount of each input human power.

## Claims

1. Power-assisted wheelchair (1 ) comprising an assist power control means (100) adapted to control the assist power of an amount determinable according to human power applied to at least one of two driving wheels (2), **characterized in that** said assist power control means (100) being further adapted to alter the amount of assist power for a given human power when the vehicle speed reaches or exceeds at least one specified preset value (V1,V2,V3).

2. Power-assisted wheelchair according to claim 1, **characterized in that** said assist power control means (100) being adapted to alter the amount of the assist power for a given human power such that when the vehicle speed exceeds a first preset value V1, the assist power is decreased as the vehicle speed increases, brought to substantially zero at a second preset value V2, and brought to a negative value when the vehicle speed exceeds a third preset value V3, where V2 is not greater than V3 (V2≤V3).

3. Power-assisted wheelchair according to claim 2, **characterized by** a preset vehicle speed control means for setting the first through third preset values V1 through V3 to the values corresponding to the amount of the human power every time it is applied to the driving wheels (2).

4. Power-assisted wheelchair according to claim 3, **characterized in that** the preset vehicle speed control means being adapted to maintain the first through third preset values of V1 through V3 at the values set before the stop of human power supply, for a specified period of time (t₁) after the stop of the human power supply, and thereafter decreases those values with the lapse of time.

5. Power-assisted wheelchair according to at least one of the preceding claims 2 to 4, **characterized in that** the assist power control means being adapted to increase the amount of the assist power with the decrease in the vehicle speed when the vehicle speed is below a fourth preset value V4 which is smaller than the first preset value of V1.

6. Power-assisted wheelchair according to at least one of the preceding claims 1 to 5, **characterized in that** the vehicle speed is the substantial center of gravity speed resultant from the rotation speeds of the left and right driving wheels.

7. Power-assisted wheelchair according to claim 1, **characterized in that** the preset values (V1,V2,V3,V4) are fixed values independent of the amount of each input human power.

8. Power-assisted wheelchair according to at least one of the preceding claims 1 to 7, **characterized by** potentiometers (72) for detecting the human power applied to the respective drive wheels (2).

9. Power-assisted wheelchair according to at least one of the preceding claims 1 to 8, **characterized in that** the assist power control means (100) being of a torque control type or a current control type.

10. Power-assisted wheelchair according to at least one of the preceding claims 1 to 9, **characterized in that** said assist power control means (100) comprising an insensitive zone width (N1,N2), which is commensurate with the degree of disability of a user, said insensitive zone width (N1,N2) being automatically settable on the basis of the history of applied human power amounts (FL,FR) or is manually settable.

11. Method of operating a power-assisted wheelchair (1) comprising an assist power control means (100) adapted to control the assist power of an amount determinable according to human power applied to at least one of two driving wheels (2), **characterized in that** for a given human power the amount of assist power is altered by the assist power control means (100) when the vehicle speed reaches or exceeds at least one specified preset value (V1,V2,V3).

12. Method according to claim 11, **characterized in that** said assist power control means (100) alters the amount of the assist power for a given human power such that when the vehicle speed exceeds a first preset value V1, the assist power is decreased as the vehicle speed increases, brought to substantially zero at a second preset value V2, and brought to a negative value when the vehicle speed exceeds a third preset value V3, where V2 is not greater than V3 (V2≤V3).

13. Method according to claim 12, **characterized in that** a preset vehicle speed control means sets the first through third preset values (V1,V2,V3) to the values corresponding to the amount of the human power every time it is applied to the driving wheels (2).

14. Method according to claim 13, **characterized in that** said preset vehicle speed control means maintains the first through third preset values of V1 through V3 at the values set before the stop of human power supply, for a specified period of time (t₁) after the stop of the human power supply, and thereafter decreases those values with the lapse of time.

15. Method according to at least one of the preceding claims 11 to 14, **characterized in that** assist power control means (100) increases the amount of the assist power with the decrease in the vehicle speed when the vehicle speed is below a fourth preset value V4 which is smaller than the first preset value of V1.

16. Method according to at least one of the preceding claims 11 to 15, **characterized in that** the vehicle speed is the substantial center of gravity speed resultant from the rotation speeds of the left and right driving wheels.

17. Method according to claim 11, **characterized in that** the preset values (V1,V2,V3,V4) are fixed values independent of the amount of each input human power.

18. Method according to at least one of the preceding claims 11 to 17, **characterized in that** potentiometers (72) detect the human power applied to the respective drive wheels (2).

19. Method according to at least one of the preceding claims 11 to 18, **characterized in that** the assist power control means (100) being of a torque control type or a current control type.

20. Method according to at least one of the preceding claims 11 to 19, **characterized in that** said assist power control means (100) comprises an insensitive zone width (N1,N2), which is commensurate with the degree of disability of a user, said insensitive width (N1,N2) is automatically set on the basis of the history of applied human power amounts (FL,FR) or is manually set.

## Patentansprüche

1. Energieunterstützter Rollstuhl (1 ) mit einer Unterstützungskraft- Steuereinrichtung (100), vorgesehen um die Unterstützungskraft auf einen Betrag, bestimmbar nach der zumindest auf eines der zwei Antriebsräder (2) angewandten Menschenkraft zu steuern, **dadurch gekennzeichnet, dass** die Unterstützungskraft- Steuereinrichtung (100) weiter vorgesehen ist, den Betrag der Unterstützungskraft für eine gegebene Menschenkraft zu verändern, wenn die Fahrzeuggeschwindigkeit zumindest einen bestimmten, voreingestellten Wert (V1, V2, V3) erreicht oder überschreitet.

2. Energieunterstützter Rollstuhl (1) nach Anspruch 1, **dadurch gekennzeichnet, dass** die Unterstützungskraft- Steuereinrichtung (100) vorgesehen ist, den Betrag der Unterstützungskraft für eine gegebene Menschenkraft derart zu ändern, dass, wenn die Fahrzeuggeschwindigkeit einen ersten voreingestellten Wert V1 überschreitet, die Unterstützungskraft vermindert wird, wie sich die Fahrzeuggeschwindigkeit erhöht, auf im Wesentlichen Null bei einem zweiten voreingestellten Wert V2 gebracht wird, und auf einen negativen Wert gebracht wird, wenn die Fahrzeuggeschwindigkeit einen dritten voreingestellten Wert V3 überschreitet, wobei V2 nicht größer als V3 (V2 ≤ V3) ist.

3. Energieunterstützter Rollstuhl nach Anspruch 2, **gekennzeichnet durch** eine voreingestellte Fahrzeuggeschwindigkeits- Steuereinrichtung zum Einstellen der ersten bis dritten vorbestimmten Werte V1 bis V3 auf die Werte, die dem Betrag der stets auf die Antriebsräder (2) ausgeübten Menschenkraft entsprechen.

4. Energieunterstützter Rollstuhl nach Anspruch 3, **dadurch gekennzeichnet, dass** die voreingestellte Fahrzeuggeschwindigkeits- Steuereinrichtung vorgesehen ist, die ersten bis dritten Werte von V1 bis V3 auf den vor dem Stopp der Menschenkraftzuführung festgelegten Werten für eine bestimmte Zeitdauer (t₁) beizubehalten, und danach diese Werte im Verlaufe der Zeit zu vermindern.

5. Energieunterstützter Rollstuhl nach zumindest einem der vorhergehenden Ansprüche 2 bis 4, **dadurch gekennzeichnet, dass** die Fahrzeuggeschwindigkeits-Steuereinrichtung vorgesehen ist, den Betrag der Unterstützungskraft mit der Verminderung in der Fahrzeuggeschwindigkeit zu erhöhen, wenn die Fahrzeuggeschwindigkeit unter einem vierten vorbestimmten Wert V4 ist, der kleiner als der erste vorbestimmte Wert von V1 ist.

6. Energieunterstützter Rollstuhl nach zumindest einem der vorhergehenden Ansprüche 1 bis 5, **dadurch gekennzeichnet, dass** die Fahrzeuggeschwindigkeit im Wesentlichen die Schwerpunktgeschwindigkeit ist, resultierend aus den Drehzahlen des linken und rechten Antriebsrades.

7. Energieunterstützter Rollstuhl nach Anspruch 1, **dadurch gekennzeichnet, dass** die vorbestimmte Werte (V1, V2, V3, V4) feststehende Werte sind, unabhängig vom Betrag der jeweiligen Menschenkrafteingabe.

8. Energieunterstützter Rollstuhl nach zumindest einem der vorhergehenden Ansprüche 1 bis 7, **gekennzeichnet durch** Potentiometer (72), um die auf die jeweiligen Antriebsräder (2) angewandte Menschenkraft zu erfassen.

9. Energieunterstützter Rollstuhl nach zumindest einem der vorhergehenden Ansprüche 1 bis 8, **dadurch gekennzeichnet, dass** die Unterstützungskraft- Steuereinrichtung (100) vom Drehmomentsteuertyp oder Stromsteuertyp ist.

10. Energieunterstützter Rollstuhl nach zumindest einem der vorhergehenden Ansprüche 1 bis 9, **dadurch gekennzeichnet, dass** die Unterstützungskraft- Steuereinrichtung (100) eine Unempfindlichkeits- Bereichsbreite (N1, N2) aufweist, die im Einklang mit dem Grad der Behinderung eines Nutzers steht, wobei die Unempfindlichkeits- Bereichsbreite (N1, N2) auf der Grundlage der vergangenen Beträge der angewandten Menschenkraft (FL, FR) automatisch einstellbar ist, oder manuell einstellbar ist.

11. Verfahren zum Betrieb eines energieunterstützten Rollstuhles (1) mit einer Unterstützungskraft- Steuereinrichtung (100), vorgesehen um die Unterstützungskraft in einem Betrag zu steuern, der entsprechend der zumindest auf eines der zwei Antriebsräder (2) angewandten Menschenkraft festlegbar ist, **dadurch gekennzeichnet, dass** für eine gegebene Menschenkraft der Betrag der Unterstützungskraft durch die Unterstützungskraft- Steuereinrichtung (100) sich ändert, wenn die Fahrzeuggeschwindigkeit zumindest einen bestimmten, vorbestimmten Wert (V1, V2, V3) erreicht oder übersteigt.

12. Verfahren nach Anspruch 11, **dadurch gekennzeichnet, dass** die Unterstützungskraft- Steuereinrichtung (100) den Betrag der Unterstützungskraft für eine bestimmte Menschenkraft derart ändert, dass wenn die Fahrzeuggeschwindigkeit einen ersten vorbestimmten Wert V1 übersteigt, die Unterstützungskraft vermindert wird, wenn die Fahrzeuggeschwindigkeit zunimmt, im Wesentlichen bei einem zweiten vorbestimmten Wert V2 auf Null gebracht wird, und auf einen negativen Wert gebracht wird, wenn die Fahrzeuggeschwindigkeit einen dritten Wert V3 übersteigt, wobei V2 nicht größer als V3 ist (V2 ≤ V3).

13. Verfahren nach Anspruch 12, **dadurch gekennzeichnet, dass** eine voreingestellte Fahrzeuggeschwindigkeits- Steuereinrichtung die ersten bis dritten vorbestimmten Werte (V1, V2, V3) auf die Werte festlegt, die dem Betrag der Menschenkraft, die stets auf die Antriebsräder (2) angewandt wird, entsprechen.

14. Verfahren nach Anspruch 13, **dadurch gekennzeichnet, dass** die voreingestellte Fahrzeuggeschwindigkeits- Steuereinrichtung die ersten bis vierten vorbestimmten Werte von V1 bis V3 bei den vor dem Stopp der Menschenkraftzuführung festgelegten Werten für eine bestimmte Zeitdauer (t₁) nach dem Stopp der Menschenkraftzuführung beibehält, und danach diese Werte im Verlaufe der Zeit vermindert.

15. Verfahren nach zumindest einem der vorhergehenden Ansprüche 11 bis 14, **dadurch gekennzeichnet, dass** die Unterstützungskraft- Steuereinrichtung (100) den Betrag der Unterstützungskraft mit der Verminderung der Fahrzeuggeschwindigkeit erhöht, wenn die Fahrzeuggeschwindigkeit unter einem vierten vorbestimmten Wert V4 ist, der kleiner als der erste vorhandene Wert von V1 ist.

16. Verfahren nach zumindest einem der vorhergehenden Ansprüche 11 bis 15, **dadurch gekennzeichnet, dass** die Fahrzeuggeschwindigkeit im Wesentlichen die Schwerpunktsgeschwindigkeit ist, resultierend aus den Drehzahlen des linken und rechten Antriebsrades.

17. Verfahren nach Anspruch 11, **dadurch gekennzeichnet, dass** die voreingestellten Werte (V1, V2, V3, V4) unabhängig von dem Betrag der jeweiligen Eingangsmenschenkraft feststehende Werte sind.

18. Verfahren nach zumindest einem der vorhergehenden Ansprüche 11 bis 17, **dadurch gekennzeichnet, dass** die Potentiometer (72) die auf die jeweiligen Antriebsräder (2) angewandte Menschenkraft erfassen.

19. Verfahren nach zumindest einem der vorhergehenden Ansprüche 11 bis 18, **dadurch gekennzeichnet, dass** die Unterstützungskraft- Steuereinrichtung (100) von einem Drehmomentsteuer- Typ oder ein Stromsteuer- Typ ist.

20. Verfahren nach zumindest einem der vorhergehenden Ansprüche 11 bis 19, **dadurch gekennzeichnet, dass** die Unterstützungskraft- Steuereinrichtung (100) eine unempfindliche Bereichsbreite (N1, N2) aufweist, die im Einklang mit dem Grad der Behinderung eines Nutzers steht, wobei die unempfindliche Bereichsbreite (N1, N2) auf der Grundlage der vergangenen Beträge der angewandten Menschenkraft (FL, FR) automatisch einstellbar ist, oder manuell einstellbar ist.

## Revendications

1. Fauteuil roulant à assistance motorisée (1) comprenant des moyens de commande de la puissance d'assistance (100) adaptés pour commander la puissance d'assistance d'une quantité pouvant être déterminée en fonction de la puissance humaine appliquée à au moins l'une de deux roues motrices (2), **caractérisé en ce que** lesdits moyens de commande de la puissance d'assistance (100) sont en outre adaptés pour modifier la quantité de puissance d'assistance pour une puissance humaine donnée lorsque la vitesse du véhicule atteint ou dépasse au moins une valeur prédéterminée spécifiée (V1, V2, V3).

2. Fauteuil roulant à assistance motorisée selon la revendication 1, **caractérisé en ce que** lesdits moyens de commande de la puissance d'assistance (100) sont adaptés pour modifier la quantité de la puissance d'assistance pour une puissance humaine donnée de sorte que lorsque la vitesse du véhicule dépasse une première valeur prédéterminée V1, la puissance d'assistance diminue à mesure que la vitesse du véhicule augmente, elle est ramenée à une valeur sensiblement nulle à une seconde valeur prédéterminée V2 et elle devient une valeur négative lorsque la vitesse du véhicule dépasse une troisième valeur prédéterminée V3, où V2 n'est pas supérieure à V3 (V2 V3).

3. Fauteuil roulant à assistance motorisée selon la revendication 2, **caractérisé par** des moyens de commande de la vitesse du véhicule prédéterminée destinés à ajuster les première à troisième valeurs prédéterminées V1 à V3 aux valeurs correspondant à la quantité de puissance humaine chaque fois qu'elle est appliquée aux roues motrices (2).

4. Fauteuil roulant à assistance motorisée selon la revendication 3, **caractérisé en ce que** les moyens de commande de la vitesse du véhicule prédéterminée sont adaptés pour maintenir les première à troisième valeurs prédéterminées V1 à V3 aux valeurs déterminées avant l'arrêt de la fourniture de puissance humaine, pendant une période de temps spécifiée (t₁) après l'arrêt de la fourniture de puissance humaine, et pour diminuer ces valeurs au fil du temps.

5. Fauteuil roulant à assistance motorisée selon au moins l'une des revendications précédentes 2 à 4, **caractérisé en ce que** les moyens de commande de la puissance d'assistance sont adaptés pour augmenter la quantité de puissance d'assistance avec la diminution de la vitesse du véhicule lorsque la vitesse du véhicule se trouve en dessous d'une quatrième valeur prédéterminée V4 qui est inférieure à la première valeur prédéterminée V1.

6. Fauteuil roulant à assistance motorisée selon au moins l'une des revendications précédentes 1 à 5, **caractérisé en ce que** la vitesse du véhicule est sensiblement la vitesse du centre de gravité résultant des vitesses de rotation des roues motrices droite et gauche.

7. Fauteuil roulant à assistan ce motorisée selon la revendication 1, **caractérisé en ce que** les valeurs prédéterminées (V1, V2, V3, V4) sont des valeurs fixes indépendantes de la quantité de chaque puissance humaine délivrée.

8. Fauteuil roulant à assistance motorisée selon au moins l'une des revendications précédentes 1 à 7, **caractérisé par** des potentiomètres (72) destinés à détecter la puissance humaine appliquée aux roues motrices respectives (2).

9. Fauteuil roulant à assistance motorisée selon au moins l'une des revendications précédentes 1 à 8, **caractérisé en ce que** les moyens de commande de la puissance d'assistance (100) sont du type à commande de couple ou du type à commande de courant.

10. Fauteuil roulant à assistance motorisée selon au moins l'une des revendications précédentes 1 à 9, **caractérisé en ce que** lesdits moyens de commande de la puissance d'assistance (100) comprennent une largeur de zone insensible (N1, N2) qui est proportionnée au degré d'invalidité d'un utilisateur, ladite largeur de zone insensible (N1, N2) étant automatiquement ajustable d'après l'histoire des quantités de puissance humaine appliquée (FL, FR) ou est ajustable manuellement.

11. Procédé de fonctionnement d'un fauteuil roulant à assistance motorisée (1) comprenant des moyens de commande de la puissance d'assistance (100) adaptés pour commander la puissance d'assistance d'une quantité pouvant être déterminée en fonction de la puissance humaine appliquée à au moins l'une de deux roues motrices (2), **caractérisé en ce que** pour une puissance humaine donnée la quantité de puissance d'assistance est modifiée par les moyens de commande de la puissance d'assistance (100) lorsque la vitesse du véhicule atteint ou dépasse au moins une valeur prédéterminée spécifiée (V1, V2, V3).

12. Procédé selon la revendication 11, **caractérisé en ce que** lesdits moyens de commande de la puissance d'assistance (100) modifient la quantité de puissance d'assistance pour une puissance humaine donnée de sorte que lorsque la vitesse du véhicule dépasse une première valeur prédéterminée V1, la puissance d'assistance diminue à mesure que la vitesse du véhicule augmente, elle est ramenée à une valeur sensiblement nulle à une seconde valeur prédéterminée V2 et elle devient une valeur négative lorsque la vitesse du véhicule dépasse une troisième valeur prédéterminée V3, où V2 n'est pas supérieure à V3 (V2 V3).

13. Procédé selon la revendication 12, **caractérisé en ce que** des moyens de commande de la vitesse du véhicule prédéterminée ajustent les première à troisième valeurs prédéterminées (V1, V2, V3) aux valeurs correspondant à la quantité de puissance humaine chaque fois qu'elle est appliquée aux roues motrices (2).

14. Procédé selon la revendication 13, **caractérisé en ce que** lesdits moyens de commande de la vitesse du véhicule prédéterminée maintiennent les première à troisième valeurs prédéterminées V1 à V3 aux valeurs déterminées avant l'arrêt de la fourniture de puissance humaine, pendant une période de temps spécifiée (t ₁) après l'arrêt de la fourniture de puissance humaine, et diminuent ensuite ces valeurs au fil du temps.

15. Procédé selon au moins l'une des revendications précédentes 11 à 14, **caractérisé en ce que** les moyens de commande de la puissance d'assistance (100) augmentent la quantité de puissance d'assistance avec la diminution de la vitesse du véhicule lorsque la vitesse du véhicule se trouve en dessous d'une quatrième valeur prédéterminée V4 qui est inférieure à la première valeur prédéterminée V1.

16. Procédé selon au moins l'une des revendications précédentes 11 à 15, **caractérisé en ce que** la vitesse du véhicule est sensiblement la vitesse du centre de gravité résultant des vitesses de rotation des roues motrices droite et gauche.

17. Procédé selon la revendication 11, **caractérisé en ce que** les valeurs prédéterminées (V1, V2, V3, V4) sont des valeurs fixes indépendantes de la quantité de chaque puissance humaine délivrée.

18. Procédé selon au moins l'une des revendications précédentes 11 à 17, **caractérisé en ce que** des potentiomètres (72) détectent la puissance humaine appliquée aux roues motrices respectives (2).

19. Procédé selon au moins l'une des revendications précédentes 11 à 18, **caractérisé en ce que** les moyens de commande de la puissance d'assistance (100) sont du type à commande de couple ou du type à commande de courant.

20. Procédé selon au moins l'une des revendications précédentes 11 à 19, **caractérisé en ce que** lesdits moyens de commande de la puissance d'assistance (100) comprennent une largeur de zone insensible (N1, N2) qui est proportionnée au degré d'invalidité d'un utilisateur, ladite largeur de zone insensible (N1, N2) étant automatiquement ajustée d'après l'histoire des quantités de puissance humaine appliquée (FL, FR) ou est ajustée manuellement.
